# EUROPÄISCHE PATENTANMELDUNG

(11) **EP 2 886 307 A1**
(43) Veröffentlichungstag der Anmeldung: **24.06.2015**
(21) Anmeldenummer: 13005959.5
(22) Anmeldetag: 20.12.2013
(51) Int. Cl.: B29C 67/00

(54) **Vorrichtung, Spezialpapier und Verfahren zum Herstellen von Formteilen**

(71) Anmelder: Voxeljet AG, 86316 Friedberg (DE)
(72) Erfinder: Günther, Daniel, D-81317 München (DE); Ederer, Ingo, D-82269 Geltendorf (DE)
(74) Vertreter: Helbig, Christian

(57) **Zusammenfassung**

Die Erfindung betrifft eine Vorrichtung, ein Spezialpapier und ein Verfahren zum Herstellen dreidimensionaler Gegenstände.

## Beschreibung

Die Erfindung betrifft eine Vorrichtung, ein Spezialpapier und ein Verfahren zum Herstellen dreidimensionaler Gegenstände.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag flüssiger Binder ist unter den Schichtbautechniken das schnellste Verfahren. Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Beim pulverbettbasierten System ist ein aufwändiges Pulverhandling kennzeichnend, dass jeden Einsatz außerhalb einer industriellen Umgebung erschwert.

Aus der Literatur sind additive Fertigungsverfahren zur Herstellung vorn dreidimensionalen Objekten nach Datensatz bekannt, wobei einige davon mit schichtförmigen Ausgangsmaterialien wie Papier arbeiten und somit das Pulverhandling umgehen.

Die Schichtdaten, die einen Schnitt des Modells in der jeweiligen Höhe darstellen, können z.B. bei einem Verfahren benutzt werden, um ein Spezialpapier entlang der gewünschten Schicht-Kontur mit einem Laser oder einem an einer Plottermechanik geführtem Messer zu schneiden. Das Papier kann dann z.B. einseitig mit einem Klebstoff beschichtet sein. Dann wird auf die geschnittene Papierschicht eine weitere Lage Papier aufgelegt und mit der vorangegangenen Schicht verklebt. Nun folgt der erneute Schneidevorgang, wobei hier nur die aktuelle Papierlage anhand der aktuellen Konturdaten getrennt werden soll. Die Vorgänge Papierauftrag und Schnitt werden so lange wiederholt, bis das gewünschte Bauteil vollständig in dem Papierstapeln enthalten ist. Zuletzt muss das die Kontur umgebende Papier vom Bauteil getrennt werden. Das kann erleichtert werden, wenn weitere Hilfsschnittlinien in den Papierstapel eingebracht wurden.

Eine derartige Vorgehensweise wird z.B. in der US 5730817 beschrieben und ist allgemein unter dem Begriff Laminated Object Manufacturing oder kurz LOM bekannt.

Ein weiterer Vorteil der Technik liegt in der Verwendung von Papier oder papier-ähnlichen Materialien, die kostengünstig verfügbar sind und mit hohem Qualitätsstandard bezogen werden können. Das Papier wird hier in Form einer Rolle dem Gerät zugeführt.

In einer anderen Ausführungsform der Firma MCor wird handelsübliches, bogenförmiges Papier in der drucker-typischen Größe A4 verwendet. Der Bogen Papier wird hier wieder mit einem Messer geschnitten. Mittels einer speziellen Einrichtung wird nur dort Klebstoff auf das Papier aufgetragen, wo auch das spätere Objekt entsteht. Das hat den Vorteil, dass sich die umgebenden Papierlagen sehr leicht vom eigentlichen Modell lösen lassen. Anschließend wird ein neuer Bogen Papier auf den Stapel gelegt, erneut geschnitten und verklebt. Der Vorgang wird solange wiederholt, bis der gewünschte Körper im Papierstapel vorliegt. Anschließend muss auch hier das umliegende Papier entfernt werden, um das Bauteil zu erhalten.

Der Nachteil der oben genannten Systeme besteht darin, dass für die Herstellung des 3D Objektes teure Spezialmaschinen erforderlich sind, die der Kunde erst erwerben und installieren muss.

Insbesondere für Kunden, die nur gelegentlich Bedarf an gedruckten 3D Objekten haben, ist die Investition in die Technik in der Regel zu hoch.

Eine der Anmeldung zugrunde liegende Aufgabe war es also ein Verfahren zur Verfügung zu stellen, das es ermöglicht ohne große Investitionskosten dreidimensionale Gegenstände nach einem CAD-Datensatz erstellen zu können.

Eine weitere der Anmeldung zugrunde liegende Aufgabe war es, Materialien bereitzustellen mit denen übliche Drucker dazu verwendet werden können, dreidimensionale Gegenstände einfach und kostengünstig herzustellen.

Eine weitere der Anmeldung zugrunde liegende Aufgabe war es, Verfahren und gegebenenfalls Materialien bereitzustellen, die die Nachteile des Standes der Technik zumindest teilweise vermindern oder ganz vermeiden.

### Kurze Beschreibung der Erfindung

In einem Aspekt betrifft die Erfindung eine Vorrichtung zum Herstellen von 3D Gegenständen.

In einem weiteren Aspekt betrifft die Erfindung ein Spezialpapier, das geeignet ist zur Herstellung von 3D Gegenständen.

In einem weiteren Aspekt betrifft die Erfindung ein Verfahren zum Herstellen von 3D Gegenständen.

In einem weiteren Aspekt betrifft die Erfindung ein Verfahren zum Herstellen von 3D Gegenständen zur Verwendung als Gussformen, die vorzugsweise nach einem ersten Verfahrensschritt weiteren Verfahrensschritten unterzogen werden.

### Ausführliche Beschreibung der Erfindung

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind.

"Selektiver Binderauftrag" oder "Selektiver Bindersystemauftrag" kann im Sinne der Erfindung mit jeder derzeit zur Verfügung stehenden Drucktechnik erfolgen. Dazu zählen Tintenstrahldrucker, Laserdrucker und Matrixdrucker.

"Formkörper" oder "Bauteil" oder "Gegenstand" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens wird eine Druckmaschine benutzt, die ähnlich oder gleich aufgebaut ist, wie eine Papierdruckmaschine oder allgemein auch "Drucker" genannt. Diese kann als Bogen oder Rollenmaschine ausgeführt werden. Damit enthält sie Papierförder-, Separier-, Führungs- und Zentriereinrichtungen, üblicherweise ein Druckwerk, ein Fixierwerk, eine Produktlagereinrichtung, und andere dem Fachmann bekannte Bauteile, die deshalb hier nicht näher ausgeführt werden.

Als "Papier" oder "Spezialpapier" wird erfindungsgemäß eine flache, ebene Materialschicht mit definierter Dicke verstanden. Die Dicke ist dabei wesentlich geringer als die beiden anderen Abmessungen. Unter "Papier" ist allerdings nicht strikt Papier im klassischen Sinn zu verstehen, sondern folienartige oder blattartige Materialien, die so aufgebaut sind, dass sie die erforderlichen Eigenschaften für das beschriebene Verfahren erfüllen. Insbesondere, dass sie selektiv verbunden werden können und ein Formteil aus dem unverbundenen Spezialpapier herausgelöst werden kann. Insbesondere sind die unten beschriebenen Materialien für diese Spezialpapier verwendbar.

Ein "Bogen" ist ein Stück Papier das zwei zueinander ungefähr gleich große Dimensionen aufweist. Der Faktor zwischen den Dimensionen ist üblicherweise nicht größer als drei.

Eine "Rolle" ist ebenso ein Stück Papier, wobei die Dimensionen stark voneinander abweichen. Faktoren bis zu mehreren tausend sind nicht unüblich.

Das "Verbinden" ist der Schritt nach dem Verfahren bei dem aus dem losen Papierstapel ein Block gebildet wird. Hierbei verbinden sich mindestens die bedruckten oder die unbedruckten Bereiche.

"Auslösen" oder "Trennen von nicht verbundenem Spezialpapier" bedeutet das Bauteil aus dem Papierstapel oder der Rolle freizusetzen. Dabei können Bäder zur Lösung unerwünschten Materials verwendet werden, oder Schmelzverfahren oder Ausbrennverfahren die das Papier pulverisieren.

"Veredeln" ist ein Zwischenschritt im Verfahren, der es ermöglicht die Wirkung des durch das Druckverfahren aufgebrachten Materials oder der Information für die Nachfolgenden Prozesse wie dem Verbinden oder dem Auslösen zu verstärken.

Im Sinne der Erfindung wird unter "Positivdruck" verstanden, dass direkt ein Gegenstand hergestellt wird, der die im wesentlichen gewünschte Form bildet. Dieser kann noch veredelt werden oder weiteren anderen Verfahrensschritten unterzogen werden.

Unter "Negativdruck" im Sinne der Erfindung ist zu verstehen, dass ein 3D-Körper hergestellt wird, der entweder direkt oder nach weiteren Behandlungsschritten als Gussform verwendet werden kann, um den letztendlich gewünschten Gegenstand herzustellen.

Im Weiteren wird die Erfindung genauer dargestellt sowie deren bevorzugte Ausführungsformen.

Ein Kern der Erfindung ist die Erkenntnis, dass heutzutage nahezu jeder Verbraucher in einem Industrieland einen 2D-Drucker besitzt. Erfindungsgemäß wird dieser mit Hilfe von Spezialpapier genutzt um Schichten zu erzeugen. In einem oder mehreren Nachbehandlungsschritten wird dann aus den Schichten der 3D-Körper erzeugt. Ein weiterer Schritt befasst sich dann mit der Befreiung des Objektes aus dem Papierstapel. Beide Schritte nach dem Drucken und Stapeln sollen mit einfachen bestenfalls im Haushalt verfügbaren Mitteln durchführbar sein.

In weiteren Ausführungen werden die Vorteile dieses Verfahrens wieder auf neuartige Vorrichtungen übertragen, da nicht nur im Bereich niedriger Investitionen hier deutliche Vorteile gegenüber dem Stand der Technik vorhanden sind.

In einem Aspekt betrifft die Erfindung eine Vorrichtung geeignet zum Herstellen eines dreidimensionalen Körpers aus einzelnen Schichten, die umfasst:
a. eine Einrichtung zum Führen und Positionieren von Spezialpapier,
b. eine Druckvorrichtung zum Bedrucken von Spezialpapier,
c. eine Nachbehandlungs- oder/und Kalibriereinheit, wobei eine Sensorik während der Herstellung eine Reihe von Spezialpapieren in einem Stapel oder einer Rolle Lageinformationen gewinnt, die zur Korrektur der aufgedruckten Bilder und der Lage dieser Bilder genutzt werden können.

In dieser Vorrichtung können alle bekannten und geeigneten Druckereinheiten Einsatz finden, vorzugsweise ist oder weist die Vorrichtung ein Tintenstrahldruckwerk, ein Laserdruckwerk oder/und ein Matrixdruckwerk auf.

Weiterhin kann die Vorrichtung eine Temperiereinheit aufweisen.

In einem weiteren Aspekt betrifft die Erfindung ein Spezialpapier, das geeignet ist zum Herstellen eines dreidimensionalen Körpers aus einzelnen Schichten. Das Spezialpapier weist vorzugsweise folgende Eigenschaften auf:
a. aktivierbare Verbindungsneigung mit benachbarter Schicht eines Spezialpapiers,
b. änderbare Löseneigung durch Bedrucken mit einem Medium,
c. Verbindungsfähigkeit der Spezialpapiere untereinander durch die Aktivierung in den durch Bedrucken definierten Bereichen,
d. Löslichkeit des nicht verbundenen Spezialpapiers durch Einwirken eines geeigneten Lösemittels, von Wärme oder/und mechanischer Energie.

Das Spezialpapier kann alle verklebbaren oder miteinander verbindbaren Materialien enthalten oder aus ihnen bestehen, vorzugsweise besteht der Grundstoff des Spezialpapiers aus Zellstofffasern, oder er ist aus den Werkstoffen Kunststoff, Naturstoff, Metall, Gestein, Mineral oder Keramik ausgewählt bzw. er stellt eine Kombination aus diesen Stoffen dar.

Vorteilhaft ist es unter Umweltgesichtspunkten, wenn das die im Spezialpapier enthaltenen Komponenten im Wesentlichen nicht giftig sind.

Wie beschrieben wurde, wird vorzugsweise in mehreren Lagen, d.h. auf eine Serie von Blättern von Spezialpapier, gedruckt und in einem weiteren Schritt die so erhaltenen Blätter werden dann miteinander in ausgewählter Reihenfolge miteinander verbunden, um den dreidimensionalen Gegenstand herzustellen. Das Spezialpapier weist eine Verbindungsfähigkeit auf, die durch ein Fluid oder ein Pulver erfolgen kann.

Vorzugsweise erfolgt die Verbindungsfähigkeit durch das Zugeben eines Stoffes oder eine Änderung einer Eigenschaft des Spezialpapiers, vorzugsweise dass die Aktivierung durch den Übertrag von Fluid oder Pulver des Farbbandes eines Matrixdruckers, eines Tintenstrahldruckers oder durch das fixierte Pulver eines Laserdruckers oder Kopierers erfolgt. Mehr bevorzugt erfolgt die Verbindungsfähigkeit durch unterschiedliche Mikrowellenselektivität im Spezialpapier erfolgt oder dass die Verbindungsfähigkeit durch das Vorhandensein oder Nicht-Vorhandensein eines diffundierbaren Mediums erfolgt. Mehr bevorzugt erfolgt die Verbindungsfähigkeit über Diffusion eines temperaturaktivierbaren Stoffes.

Das Spezialpapier kann in allen geeigneten Formen bereitgestellt werden, vorzugsweise in Bögen oder in Rollen vorliegen.

In einem weiteren Aspekt betrifft die Erfindung ein Verfahren zum Herstellen eines dreidimensionalen Körpers, umfassend die Schritte:
a. Bedrucken von Spezialpapier wie es oben beschrieben wurde,
b. Wiederholen des Bedruckens solange bis alle Schnittbilder eines dreidimensionalen Körpers bei gegebener Schichtstärke des Spezialpapiers auf dem Spezialpapier vorliegen,
c. Anordnen aller in b.) erhaltenen bedruckten Spezialpapiere in geeigneter Anordnung,
d. Verbinden der so angeordneten Spezialpapiere,
e. Lösen des erhaltenen dreidimensionalen Körpers von nicht verbundenem Spezialpapier.

In dem erfindungsgemäßen Verfahren wird das Spezialpapier vorzugsweise in Einzelbögen, ungeteilten oder perforierten Papierrollen verwendet.

Das Bedrucken erfolgt mit geeigneten Druckmitteln, vorzugsweise mit einem Tintenstrahl-, Matrix- oder Laserdrucker.

In einem bevorzugten Schritt wird eine wasserhaltige Substanz, vorzugsweise durch einen Tintenstrahldrucker, ein thermoplastischer Kunststoff, vorzugsweise durch einen Laserdrucker, oder ein hochviskoser Klebstoff, vorzugsweise durch das Band eines Matrixdruckers auf das Spezialpapier aufgebracht und die ausgewählten Bereiche so vorzugsweise verbunden.

Vorzugsweise kann das Verbinden des Materials der ausgewählten Bereiche durch Wärmeenergie und/oder durch Druck ausgelöst werden. Mehr bevorzugt wird das Verbinden durch eine weitere Substanz ausgelöst.

Der so erhaltene dreidimensionale Körper kann vorzugsweise durch einen Löseprozess in einem Lösemittel, durch einen thermischen Prozess oder mechanisch, von dem nicht verbundenen Spezialpapier gelöst werden.

Nach dem erfindungsgemäßen Verfahren kann der dreidimensionale Formkörper vorzugsweise weiteren Bearbeitungsschritten unterzogen werden, vorzugsweise einem Durchtränken oder Perfundieren des dreidimensionale Formkörpers oder/und Auf- oder Einbringen einer Substanz zur Härtung des dreidimensionale Formkörpers.

Das erfindungsgemäße Spezialpapier kann weiterhin in allen geeigneten Verfahren verwendet werden, die zur Herstellung von dreidimensionalen Gegenständen geeignet sind.

Weiterhin ist ein Aspekt der Erfindung ein dreidimensionaler Gegenstand hergestellt mit einem der oben beschriebenen Verfahren.

Im Weiteren werden bevorzugte Aspekte der Erfindung weiter beschrieben.

In einem ersten Aspekt bezieht sich die Erfindung auf eine Anwendung im Heimbereich. Dabei sind Nutzer gemeint, die nur selten ein 3D-Objekt benötigen und einen normalen 2D-Drucker besitzen.

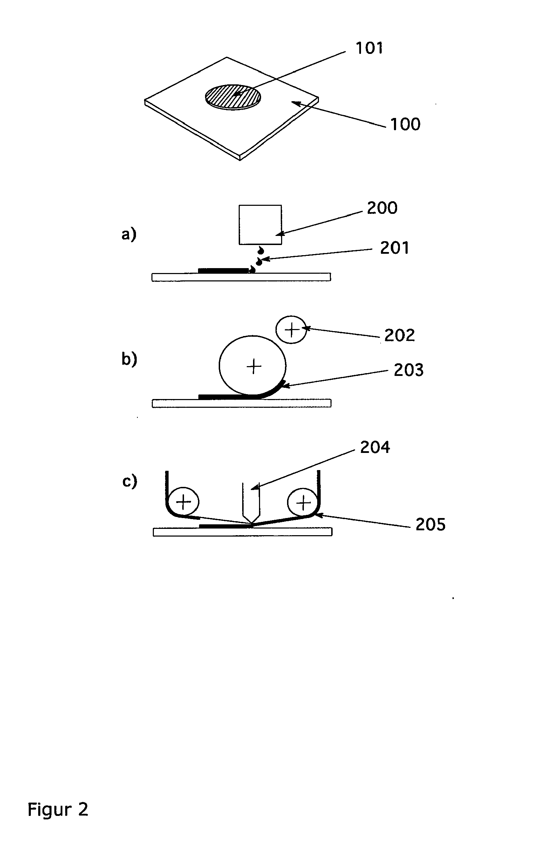

Erfindungsgemäß soll der Nutzer ein Spezialpapier (100) in den normalen Drucker einlegen und bedrucken. Die jeweiligen Ausdrucke sind die Schnittbilder des 3D-Objektes. Die Schichtstärke und damit die Schnittlage im Datensatz sind durch die bereits gedruckten Schichten und die Blattstärke definiert. Als Drucker kommt z.B. ein Laserdrucker, ein Tintenstrahldrucker oder ein Nadeldrucker zum Einsatz (Figur 2). Damit können unterschiedliche Materialien aufgebracht werden.

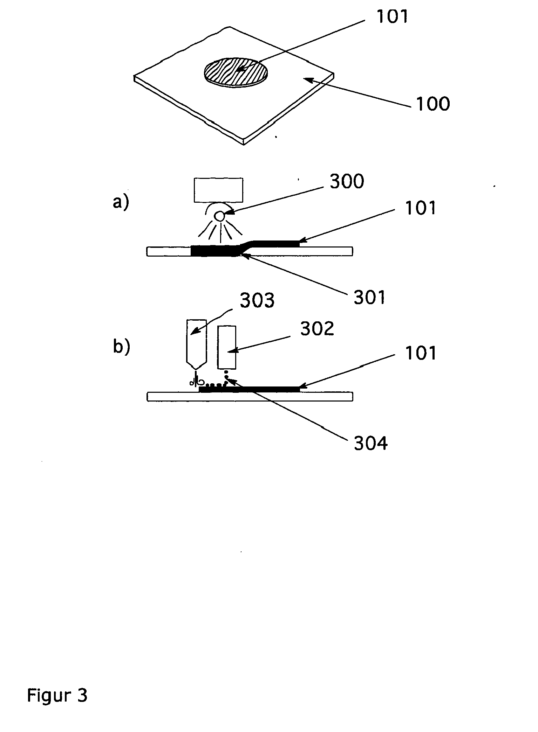

Beispielsweise kann das aufgedruckte Material zum Großteil Wasser sein, das rein als Informationsträger dient. Dieses kann selbst eine Eigenschaft im Spezialpapier (100) ändern oder es kann nach einem Veredelungsprozess (Figur 3) genutzt werden. Eine solche Zusammensetzung kann in den Tinten eines Tintenstrahlofficedruckers gefunden werden. Außerdem kann das Wasser einen löslichen Kunststoff enthalten, der in einem nachgeschalteten Ofenprozess vernetzt wird und so zum gewünschten Körper führt, wobei das Spezialpapier in diesem Fall das Druckmedium immobilisiert.

Alternativ wird durch einen Laserdrucker ein Bild (203) aus einem Polymer mit dem Papier verschmolzen.

Ein Matrixdrucker bringt meist eine hochviskose Tinte auf. Diese kann wieder in einem Veredelungsprozess genutzt werden.

Der Blattstapel (102) aus dem Drucker wird im Anschluss daran sortiert und exakt gestapelt. Nun bringt der Nutzer den Stapel zur Verbindung der einzelnen Schichten z.B. in den Haushaltsofen. Durch die Wärme (103) schmilzt beispielsweise ein Teil des Aufdrucks und diffundiert in ein oder beide benachbarte Blätter, vorzugsweise das Blatt oberhalb.

Dabei können verschiedene Mechanismen wirksam werden. Zum einen wird das geschmolzene Material in alle Raumrichtungen verteilt (402). Zum anderen werden weitere Zwangskräfte wirksam wie etwa die Gravitation oder ein von außen aufgebrachter Druck (403,404).

Ebenso ist es möglich den Blattstapel in eine Haushaltsmikrowelle zu bringen. Dies eignet sich besonders in Verbindung mit dem Einsatz eines Tintenstrahldruckers. Das aufgedruckte Wasser kann durch Komponenten wie feste (z. B. Xanthan, Gelatine, Polyvinylalkohol, Polyethylenglykole Molmasse>600 g/mol) und/oder flüssige Verdicker (z. B. Propylenglykol, Glycerin, Polyethylenglykol Molmasse<600 g/mol) im Spezialpapier (100) am Verdampfen gehindert werden. In der Mikrowelle wird durch die hohe Absorption der Mikrowellenstrahlung des Wassers an den bedruckten Stellen gezielt Energie aufgenommen und effektiv Wärme erzeugt. Die hohe Hitzeentwicklung kann wiederum genutzt werden, um eine im Spezialpapier (100) vorgelegte Komponente lokal aufzuschmelzen und damit den Blattstapel (102) zu verbinden.

In einer alternativen Ausführungsform verschmelzen nur die unbedruckten Bereiche, da z.B. durch das Fehlen eines Feuchthaltemittels und/oder flüchtigere Bestandteile im Druckmedium die Verdampfungskälte dazu führt, dass die Temperatur an den bedruckten Stellen nicht hoch genug ist, um die auf dem Spezialpapier enthaltende Komponente (z. B. Kunststoff zu schmelzen.

So verfestigt wird der Blattstapel (102, 401) in ein Lösungsmittel, z.B. ein Wasserbad (501) gebracht. Dabei löst sich das ungedruckte Papier und der gewünschte Formkörper (104) wird freigegeben.

In einer alternativen Ausführungsform entnimmt der Nutzer den Blattstapel aus dem Drucker, sortiert und stapelt ihn. Nun bringt der Nutzer den Stapel zur Verbindung der einzelnen Schichten in ein flüssiges Medium, z.B. ein Kunstharz. Die Flüssigkeit dringt dann ausschließlich in die bedruckten Bereiche ein, weil dort das Spezialpapier beispielsweise durch das Auflösen einer Schutzschicht gegenüber dem Harz und durch die Mischbarkeit mit dem Druckmedium eine spezielle Aufnahmefähigkeit entwickelt hat. In einem anderen Fall dringt die Flüssigkeit nur in die unbedruckten Bereiche ein, da die bedruckten Bereiche gegen den Flüssigkeitseintrag versiegelt wurden und das Harz mit dem Druckmedium nicht mischbar ist. Die Flüssigkeit härtet nun z.B. durch chemische Reaktion nach einer gewissen Wartezeit oder durch Einwirkung von Energie in Form von Wärme oder Strahlung und bildet den gewünschten Formkörper. Nach abgeschlossener Reaktion wird das den Formkörper umgebende Spezialpapier z.B. in einem Lösungsmittel gelöst.

Eine wesentliche Voraussetzung für dieses Verfahren ist der Einsatz von ungiftigen und einfach zu handhabenden Spezialpapier und der Einsetzbarkeit von möglichst handelsüblichen Druckmedien. Dabei dürfen sowohl bei der Handhabung als auch beim Verbinden keine Giftstoffe freigesetzt werden. Ebenso darf der Löseprozess vorzugsweise zu keiner Abwasserbelastung führen.

Damit ist ein Verfahren geschaffen, das es ermöglicht bei geringem Bedarf an 3D-Objekten eine Fertigung zu Hause durchzuführen. Dazu ist lediglich ein Stapel (102) Spezialpapier (100) notwendig. Die restlichen Voraussetzungen sind in den meisten Haushalten gegeben.

Eine zentrale Komponente bei diesem Verfahren ist das Spezialpapier (100). Es muss mit handelsüblichen Druckern aktivierbar sein, ohne diese zu beschädigen. Die Aktivierung muss zu einer Verbindung der einzelnen Papierblätter führen und nach dem Prozess muss die Form herausgelöst werden.

Die Aktivierung kann wie oben knapp ausgeführt z.B. mit einem handelsüblichen Laserdrucker (Figur 2a) erfolgen. Während des Druckprozesses wird dabei auf dem Papier eine Schicht (203) aus einem wasserunlöslichen, thermoplastischen Kunststoff aufgetragen und durch Anschmelzen fixiert.

Um die weiteren Schritte durchführen zu können, kann das Papier (100) wasserlöslich ausgeführt werden. Die durch den Druckprozess aufgebrachten Schichten (203) dringen durch den Ofenprozess in das Papier ein und verändern die Löslichkeit. Nach dem Tauchen des Blattstapels in ein Wasserbad (501) ist das Formteil (104) verfügbar.

Interessanterweise lässt sich über die Methode auch ein vollfarbiges Formteil gewinnen, wenn die Farbinformation des Druckes in dem Formteil erhalten wird. Dazu werden die Daten mit der schichtgenauen Farbinformation mittels Tintenstrahldrucker oder Laserdrucker auf dem Spezialpapier ausgedruckt und wie oben beschrieben weiter behandelt.

Das erfindungsgemäße Verfahren bietet in einem zweiten Aspekt auch für industrielle Anwendungen Vorteile. Hier stehen die Investitionen im Hintergrund. Dennoch können mit dem Übereinanderlegen von Papieren zu einem Stapel, dem Verbinden und dem Auslösen neuartige Eigenschaften erzielt werden.

Hier steht besonders die erreichbare Produktionsleistung im Vordergrund. So können beispielweise verschiedene Bögen gleichzeitig bedruckt werden. Die Bögen werden anschließend durch Bildung eines Stapels (102) wieder in die Schichtfolge gebracht.

Ebenso wäre es möglich auf eine Papierrolle (600) zu drucken. Die Rolle wirkt beim Auslösen wie ein Papierstapel. Die Daten müssen den Gegebenheiten angepasst werden. Auch hier sind wieder verschiedene Parallelisierungen möglich. Beispielsweise können mehrere Rollen bedruckt werden und ineinander gewickelt werden.

Ein weiterer Vorteil des Einsatzes von Spezialpapier (100) liegt in den besonderen Eigenschaften die innerhalb der Schicht erreicht werden kann. Es sind die verschiedensten Grundmaterialien möglich. Dabei kann z.B. gegenüber dem pulverbasierten 3D-Druck eine höhere Dichte innerhalb einer Schicht erzeugt werden. Dies bedeutet z.B. bei Sinterwerkstoffen einen wesentlichen Vorteil.

Auch können mit diesem System schwundbehaftete sich verfestigende Materialien verarbeitet werden. So werden bei ausreichender Dichte des Spezialpapieres thermische Ausdehnungen nicht wirksam.

### Kurze Beschreibung der Figuren:

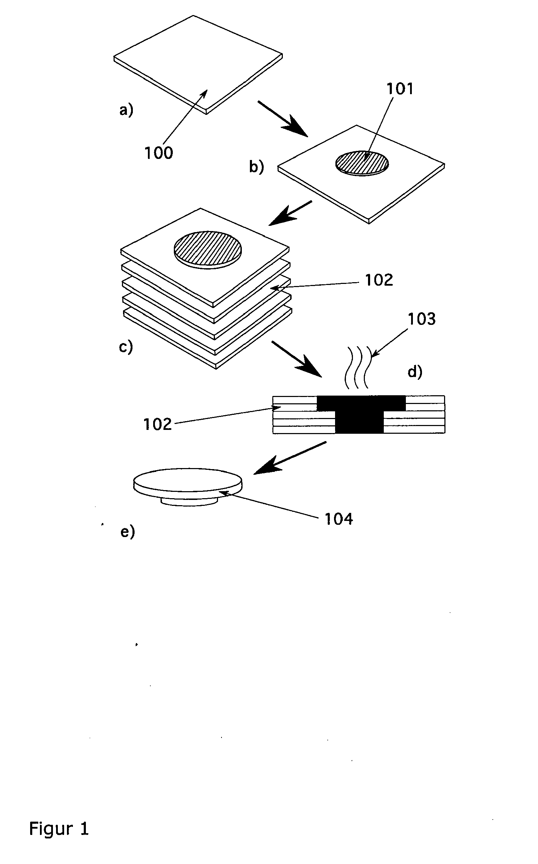

*Figur 1**:* Schematische Darstellung des erfindungsgemäßen Verfahrens.
*Figur 2**:* Schematische Darstellung von verschiedenen Druckverfahren.
*Figur 3**:* Schema von Veredelungsverfahren

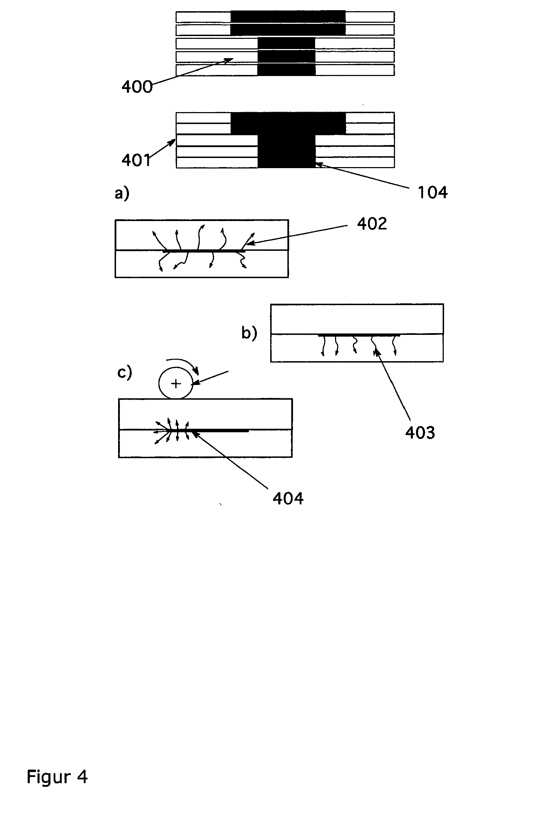

*Figur 4**:* Verbindung der Schichten durch Diffusion, Gravitation oder Druck
*Figur 5**:* Verschiedene Prozesse zur Auslösung des Formteils

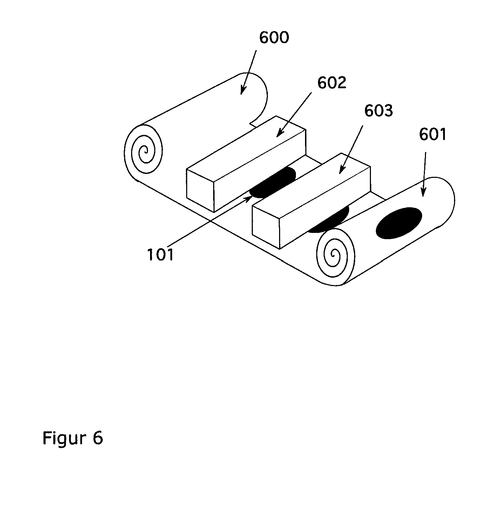

*Figur 6**:* Erfindungsgemäße Vorrichtung zum Erzeugen von 3D-Formkörpern mit Papierrollen

Weitere Details sowie bespielhaft bevorzugte Ausführungsformen und Vorteile der Erfindung werden im Folgenden ausgeführt.

### Ausführungsbeispiele

### Ausführungsbeispiel 1 (Spezialpapier - Laserdrucker - Haushaltsofen):

Bei dieser Ausführung der Erfindung steht die Heimanwendung im Vordergrund. Die Ausführung ermöglicht folgendes Szenario. Ein 3D-Gegenstand im Internet gefällt dem Benutzer besonders gut. Er kauft sich das Spezialpapier das zu seinem 2D-Drucker passt. Eine spezielle Software erlaubt dann die Konvertierung von einem 3D-Format in 2D-Einzelbilder. Zudem wird der Vorgang durch das Programm begleitet und es werden Assistenten zur Verfügung gestellt, die die Blattreihenfolge kontrollieren. Der Nutzer kann jetzt seinen Stapel ausdrucken. Nach sorgfältigem Schichten wird der gesamte Stapel in den Ofen gebracht. Nach einer Abkühlphase wäscht der Nutzer sein Bauteil aus dem Stapel heraus.

Mit dieser Technik wird der Nutzer in die Lage versetzt ein 3D-Bauteil in weniger als 1 Tag zuhause zu produzieren. Er muss dabei keine Investition tätigen und keine besonderen handwerklichen Fähigkeiten besitzen.

Die Papierzusammensetzung ist für die Prozessschritte entscheidend. In diesem Anwendungsbeispiel kommt zellstoffbasiertes Papier zum Einsatz. Die Fasern sind kurz und liegen in Ihrer Länge wesentlich unter der Blattdicke. Die Blattdicke beträgt 80 µm und damit sind die Fasern in der Länge von 20-30µm. Das Flächengewicht des Papiers muss deutlich unter 60g/m² liegen. Es ist also ein sehr loses und leichtes Papier.

Die Papierbindung erfolgt über einen wasserlöslichen Stoff. In diesem Beispiel wird das Polymer Polyvinylalkohol (PVA) verwendet. Dieser kann im Auswaschprozess leicht gelöst werden. Warmes Wasser steigert dabei die Geschwindigkeit. Wenn Rückstände von PVA in die Kanalisation gelangen, entsteht keine Umweltgefährdung, da dieser Kunststoff biologisch abbaubar ist.

Das Polymer muss dabei vom Schmelzpunkt oder dem Glasübergang so gewählt werden, dass es den Fixierprozess im Laserdruck übersteht und nicht schmilzt. Andernfalls würde der Druck beschädigt werden.

Dieses Spezialpapier (100) wird im Anschluss gemäß der Schichtdaten (101) bedruckt. Dabei sorgt das Druckprogramm für eine Nummerierung der Blätter (100) und für den jeweils höchstmöglichen Tonerauftrag. Die einzelnen Blätter (100) werden zu einem Stapel (102,400) zusammengelegt.

Im Allgemeinen werden in Laserdruckern Polymethylmethacrylat (PMMA) basierte Toner eingesetzt. Dieser aus Mikrokügelchen bestehende Toner wird elektrostatisch gemäß den Daten als Schicht (203) an das Papier geheftet und im Anschluss durch starke Erwärmung mit dem Papier verschmolzen.

Ein derart bedrucktes Papier zeigt beim Einlegen in Wasser die gewünschte hydrophobe Eigenschaft. Das Bild bleibt als dünner Film erhalten. Der Rest des Papieres löst sich unter leichtem Rühren ab.

Im Anschluss wird dieser Stapel (400) im Ofen mit Wärme (103) nachbehandelt. Da das Papier (100) im Allgemeinen ein schlechter Wärmeleiter ist, muss der Vorgang beispielsweise bei einem 10 cm hohen Stapel aus DIN A4 Papieren (400) mehrere Stunden andauern. Für die Verbindung der Schichten muss wieder die Glasübergangstemperatur von PMMA überschritten werden. Vorteilhafterweise sollte die Glasübergangstemperatur des PVAs nicht überschritten werden, damit nicht der gesamte Stapel (401) verdichtet wird und damit später schlechter löslich ist. Deshalb ist es zielführend den Ofen auf ca. 100°C einzustellen.

Daraufhin wird der Papierstapel (401) dem Ofen entnommen. Damit sich das Bauteil im Inneren nicht verzieht, da der thermoplastische Kunststoff noch weich ist, muss der Stapel (401) nach dem Ofen auskühlen. Auch hier ist wieder auf Grund der Wärmeleitfähigkeit des Papieres eine gewisse Zeit notwendig. Bei dem oben beschriebenen Stapel (401) von 10 cm Höhe und den Abmessungen eines DIN A4 Papieres sollte eine Stunde bei Raumtemperatur ausgelagert werden.

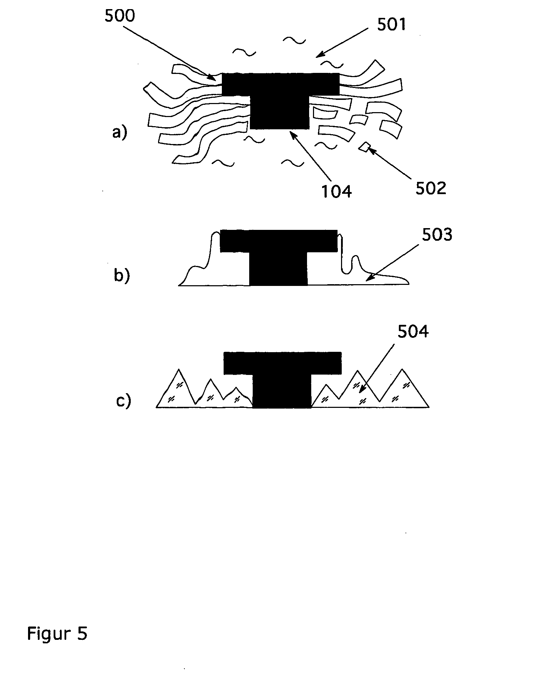

Zum Lösen (Figur 5) des unbedruckten Papieres wird der Stapel (401) in ein Wasserbad (501) gelegt. Dieses kann ein Wanne oder Waschbecken sein. Warmes Wasser beschleunigt den Vorgang. Zusätzliches Reiben mit der Hand oder einer Bürste löst anhaftendes Papier schneller (500). Das Wasser sollte nicht zu heiß sein, damit sich das Bauteil nicht verzieht und man sich nicht verbrüht. Wenn die Verbindung der Schichten nicht ausreichend ist, lösen sich die einzelnen Lagen wieder voneinander.

Erfindungsgemäß ist es sehr bevorzugt, dass der Grundstoff des Papieres (100) vollkommen ungiftig und nicht umweltschädlich ist. Das gelöste Material (502) kann jetzt mit einem Sieb vom Wasser grob getrennt werden und in den Hausmüllgegeben werden. Der Rest wird ins Abwasser spült.

### Ausführungsbeispiel 2 (Keramisches Spezialpapier - Tintenstrahldrucker-Industrieofen):

Das zweite Beispiel beschreibt eine Industrieanwendung des genannten Prinzips. Hierbei werden die weiteren Vorteile des Verfahrens genutzt. Eine Investition geht hier der Nutzung voraus.

Als Papier wird diesmal eine keramische Folie im Grünzustand benutzt. Diese besteht im Wesentlichen aus einer silikatkeramischen Masse. Diese wird mit PVA und Wasser gemischt und zu einem Papier/Folie ausgewalzt. Daran anschließend folgt ein Trocknungsprozess bei dem sämtliche Verdampfbare Flüssigkeit entfernt wird. Die Trocknung muss unter dem Glasübergang des PVA stattfinden und schonend erfolgen, damit keine Risse auftreten. Die Temperaturen sind unter 100°C zu halten. Im Anschluss kann das Papier zwischen zwei beheizten Walzen durch Hitzeeinwirkung plastifiziert und für ein gute Parallelität und Schichtdickenkontrolle kalibriert werden.

Dieses Papier kann zu Bögen weiterverarbeitet werden oder als Rolle (600) verwendet werden. Es ist nach der Trocknung durch eine Dicke von unter 100µm elastisch biegsam und kann zu relativ engen Wickeln mit einem Radius von 50 mm gebogen werden.

Eine erfindungsgemäße Vorrichtung zum Bedrucken dieser Rolle sieht eine Abrolleinrichtung vor von der das Material den Prozesseinheiten zugeführt wird. In einer geraden Bahn wird es unter einem Tintenstrahldruckkopf (602), einer Zwischenerwärmung und einer Kalibrierstation (603) durchgeführt.

Als Tinte wird im erfindungsgemäßen Beispiel Wachs verwendet. Hierbei wird der Schmelzpunkt durch Zugabe von einem niedrig schmelzenden Polymer (Polyethylen PE) eingestellt. Dieses Material kann bei 70°C sicher mit einem Tintenstrahldruckmodul verarbeitet werden. Zur Verstärkung der Keramischen Folien können der Tinte bevorzugt keramische Partikel beigegeben werden.

Das auf dem Papier auftreffende Wachs wird durch die Folien sofort abgekühlt und bleibt auf der Oberfläche stehen. Deshalb wird in einem nachgeschalteten Schritt eine gezielte lokale Erwärmung durchgeführt. Dabei durchdringt das Wachs das Papier. Eine genaue Einstellung der Geschwindigkeit der Bahn und Erwärmungsleistung sind erforderlich um nachher eine Verbindung der Papierrolle zu erreichen.

Eine weitere mögliche Einheit besteht aus gegenüberliegenden Walzen. Hier wird das nach dem Erwärmungsprozess überstehende noch plastische Wachs auf einen exakten Überstand über die Folie kalibriert.

Im Anschluss wird die Bahn auf eine Walze (601) mit definierter Vorspannung aufgerollt. Die Bilder sollten jetzt im Idealfall so übereinander liegen, dass man bei gedachten Schnitten durch die Rolle die gewünschten Bauteile geometrie- und maßhaltig vorfinden würde.

Da Ungenauigkeiten im System zu befürchten sind, werden Sensoren verwendet die die Rollendicke permanent überwachen. Dieses Signal wird genutzt um die Position und den Inhalt der aufgedruckten Bilder aktiv anzupassen. Hierbei müssen alle erforderlichen Umrechnungen, wie beispielsweise die Umrechnung in Polarkoordinaten, erfolgen.

Der Druckprozess läuft dabei kontinuierlich ab. Die Geschwindigkeit ist nur durch den Tintenstrahldruckkopf und dessen Ausführung begrenzt. Alle prozessierenden Einheiten können zudem mehrfach vorhanden sein. Damit ist durch die Erfindung ein echtes Hochleistungsfertigungsverfahren zu realisieren.

Im Anschluss an den Druckprozess wird die Rolle dem Verbinden unterzogen. Gleich wie beim Prozess für den Heimanwender wird hierzu ein Ofen benutzt. Jetzt schmelzen die Wachsschichten ineinander und es bilden sich wasserunlösliche Körper. Durch die exakte Kalibrierung und die hohe Dichte des gewalzten Keramikpapiers entsteht ein hochdichter Keramikgrünling.

Das Lösen erfolgt wie beschrieben auch hier mit einem Wasserbad. Dabei können im industriellen Maßstab Wasserwechsel, andere Temperierungen, Filtrationen am Lösemedium, mechanische Reinigung durch Hochdruckstrahlen und automatisches Bürsten erfolgen. Die losen Teile können aus der Lösung durch Sieben geholt werden.

Bei diesem Beispiel mit keramischem Papier folgt zweckmäßigerweise nach diesen Prozessen noch ein Sinterschritt. Dabei wird in einem ersten Schritt das Wachs ausgebrannt. Diese erfolgt bei Temperatur bis zu 500°C. Die Formen sind durch die hohe Packungsdichte auch nach diesem sog. Entbindern selbsttragend. Der Brand erfolgt bei 1200°C.

### Bezugszeichenliste

- 100: Spezialpapier
- 101: Bedruckte Fläche
- 102: Papierstapel
- 103: Wärme
- 104: Bauteil
- 200: Tintenstrahldruckkopf
- 201: Tintentropfen
- 202: Tonerwalze
- 203: Tonerbild
- 204: Drucknadel
- 205: Farbband
- 300: Wärmequelle
- 301: Eingedrungenes Material
- 302: Bestreuen mit Material
- 303: Abblasvorrichtung
- 400: Unverbundener Stapel
- 401: Verbundener Stapel
- 402: Kapillarwirkung
- 403: Gravitationswirkung
- 404: Druckwirkung
- 500: Anhaftendes Papier
- 501: Wasserbad
- 502: Freier Papierrest
- 503: Geschmolzenes Papier
- 504: Pulverisiertes Papier
- 600: Rolle mit Ausgangsmaterial
- 601: Fertiger "Stapel"
- 602: Druckeinheit
- 603: Erwärm- und Nivelliereinheit

## Patentansprüche

1. Vorrichtung geeignet zum Herstellen eines dreidimensionalen Körpers aus einzelnen Schichten umfassend:
a. Einrichtung zum Führen und Positionieren von Spezialpapier,
b. Druckvorrichtung zum Bedrucken von Spezialpapier,
c. Nachbehandlungs- oder/und Kalibriereinheit,
wobei eine Sensorik während der Herstellung eine Reihe von Spezialpapieren in einem Stapel oder einer Rolle Lageinformationen gewinnt, die zur Korrektur der aufgedruckten Bilder und der Lage dieser Bilder genutzt werden können.

2. Vorrichtung nach Anspruch 1, **dadurch gekennzeichnet, dass** sie ein Tintenstrahldruckwerk, ein Laserdruckwerk oder/und ein Matrixdruckwerk aufweist, vorzugsweise
**dadurch gekennzeichnet, dass** sie eine Temperiereinheit aufweist.

3. Spezialpapier geeignet zum Herstellen eines dreidimensionalen Körpers aus einzelnen Schichten, welches folgende Eigenschaften umfasst:
a. aktivierbare Verbindungsneigung mit benachbarter Schicht eines Spezialpapiers,
b. änderbare Löseneigung durch Bedrucken mit einem Medium,
c. Verbindungsfähigkeit der Spezialpapiere untereinander durch die Aktivierung in den durch Bedrucken definierten Bereichen,
d. Löslichkeit des nicht verbundenen Spezialpapiers durch Einwirken eines geeigneten Lösemittels, von Wärme oder/und mechanischer Energie.

4. Spezialpapier nach Anspruch 3, **dadurch gekennzeichnet, dass** der Grundstoff des Spezialpapiers Zellstofffasern sind, oder aus den Werkstoffen Kunststoff, Naturstoff, Metall, Gestein, Mineral oder Keramik ausgewählt ist bzw. eine Kombination aus diesen Stoffen darstellt, vorzugsweise
**dadurch gekennzeichnet, dass** die im Papier enthaltenen Komponenten im Wesentlichen nicht giftig sind, vorzugsweise
**dadurch gekennzeichnet, dass** die Verbindungsfähigkeit durch ein Fluid oder ein Pulver erfolgt, vorzugsweise
**dadurch gekennzeichnet, dass** die Verbindungsfähigkeit durch das Zugeben eines Stoffes oder eine Änderung einer Eigenschaft des Spezialpapiers erfolgt, vorzugsweise dass die Aktivierung durch den Übertrag von Fluid oder Pulver des Farbbandes eines Matrixdruckers, eines Tintenstrahldruckers oder durch das fixierte Pulver eines Laserdruckers oder Kopierers erfolgt.

5. Spezialpapier nach einem der Ansprüche 3 - 4, **dadurch gekennzeichnet, dass** die Verbindungsfähigkeit durch unterschiedliche Mikrowellenselektivität im Spezialpapier erfolgt, vorzugsweise **dadurch gekennzeichnet, dass** die Verbindungsfähigkeit durch das Vorhandensein oder Nicht-Vorhandensein eines diffundierbaren Mediums erfolgt, vorzugsweise
**dadurch gekennzeichnet, dass** die Verbindungsfähigkeit über Diffusion eines temperaturaktivierbaren Stoffes erfolgt, vorzugsweise **dadurch gekennzeichnet, dass** das Spezialpapier in Bögen oder in Rollen vorliegt.

6. Verfahren zum Herstellen eines dreidimensionalen Körpers, umfassend die Schritte:
a. Bedrucken von Spezialpapier nach einem der Ansprüche 3-5,
b. Wiederholen des Bedruckens solange bis alle Schnittbilder eines dreidimensionalen Körpers bei gegebener Schichtstärke des Spezialpapiers auf dem Spezialpapier vorliegen,
c. Anordnen aller in b.) erhaltenen bedruckten Spezialpapiere in geeigneter Anordnung,
d. Verbinden der so angeordneten Spezialpapiere,
e. Lösen des erhaltenen dreidimensionalen Körpers von nicht verbundenem Spezialpapier.

7. Verfahren nach Anspruch 6, **dadurch gekennzeichnet, dass** als Spezialpapier Einzelbögen, ungeteilte oder perforierte Papierrollen verwendet werden.

8. Verfahren nach Anspruch 6 oder 7, **dadurch gekennzeichnet, dass** das Bedrucken mit einem Tintenstrahl-, Matrix- oder Laserdrucker erfolgt.

9. Verfahren nach einem der Ansprüche 6 - 8, **dadurch gekennzeichnet, dass** eine wasserhaltige Substanz, vorzugsweise durch einen Tintenstrahldrucker, ein thermoplastischer Kunststoff, vorzugsweise durch einen Laserdrucker, oder ein hochviskoser Klebstoff, vorzugsweise durch das Band eines Matrixdruckers auf das Spezialpapier aufgebracht wird.

10. Verfahren nach einem der Ansprüche 6 - 9, **dadurch gekennzeichnet, dass** das Verbinden durch Wärmeenergie und/oder durch Druck ausgelöst wird.

11. Verfahren nach einem der Ansprüche 6 - 10, **dadurch gekennzeichnet, dass** das Verbinden durch eine weitere Substanz ausgelöst wird.

12. Verfahren nach einem der Ansprüche 6 - 11, **dadurch gekennzeichnet, dass** der dreidimensionale Körper durch einen Löseprozess in einem Lösemittel, durch einen thermischen Prozess oder mechanisch, vorzugsweise mit Hilfe von Sollbruchstellen, von dem nicht verbundenen Spezialpapier gelöst wird.

13. Verfahren nach einem der Ansprüche 6 - 12, **dadurch gekennzeichnet, dass** der dreidimensionale Körper weiteren Bearbeitungsschritten unterzogen wird, vorzugsweise einem Durchtränken oder Perfundieren des dreidimensionale Körpers oder/und Auf- oder Einbringen einer Substanz zur Härtung des dreidimensionale Körpers.

14. Verwendung eines Spezialpapiers nach einem der Ansprüche 3 - 5 zur Herstellung von dreidimensionalen Gegenständen.

15. Dreidimensionaler Gegenstand hergestellt mit einem Verfahren nach einem der Ansprüche 6 - 13.
